(19) Europäisches Patentamt
European Patent Office
Office européen des brevets

(11) **EP 2 445 246 A1**

(12) **EUROPEAN PATENT APPLICATION**

(43) Date of publication:
25.04.2012 Bulletin 2012/17

(51) Int Cl.:
*H04W 16/18* (2009.01)

(21) Application number: 10190891.1

(22) Date of filing: 11.11.2010

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 22.10.2010 US 405934 P

(71) Applicant: NTT DoCoMo, Inc.
Chiyoda-ku
Tokyo 100-6150 (JP)

(72) Inventors:
• Biermann, Thorsten
85764, Oberschleissheim (DE)
• Scalia, Luca
81371 München (DE)
• Choi, Changsoon
80665, München (DE)
• Kozu, Kazuyuki
81927, München (DE)
• Kellerer, Wolfgang
82256, Fürstenfeldbruck (DE)

(74) Representative: Zinkler, Franz
Schoppe, Zimmermann, Stöckeler & Zinkler
Patentanwälte
Postfach 246
82043 Pullach bei München (DE)

Remarks:
Amended claims in accordance with Rule 137(2)
EPC.

(54) **Apparatus and method for determining a core network configuration of a wireless communication system**

(57) An apparatus (100) for determining a core network configuration (112) of a wireless communication system comprises cluster determiner (110). A core network of a wireless communication system comprises a plurality of base stations, a plurality of wireline links between the base stations and at least one control unit for controlling a cluster of base stations of the plurality of base stations. The cluster determiner (110) determines as the core network configuration (112) at least one cluster of base stations linked by wireline links and controlled by a same control unit based on a predefined basic network configuration (102), so that latencies between each base station of the cluster and the control unit of the cluster are below a maximal allowable latency. The predefined basic network configuration (102) represents information about all base stations of a core network to be configured and about possible wireline links between the base stations.

100

102

cluster
determiner — 110

112

**FIG 1**

**Description**

Embodiments according to the invention relate to wireless communication systems and particularly to an apparatus and a method for determining a core network configuration of a wireless communication system.

Cooperation in cellular mobile access networks shows high benefits in terms of wireless transmission capacity, inter-cell interference management, and energy consumption. Several techniques have been proposed so far (joint precoding and decoding, inter-cell coordination, etc.), each of them improving different performance merits.

There has been a lot of research in the area of implementing and evaluating the performance of different cooperation techniques, like joint signal processing ("V. Jungnickel, L. Thiele, T. Wirth, T. Haustein, S. Schiffermüller, A. Forck, S. Wahls, S. Jaeckel, S. Schubert, H. Gäbler, and Others, 'Coordinated multipoint trials in the downlink,' in Proc. IEEE Broadband Wireless Access Workshop (BWAWS), Nov. 2009"; "V. Jungnickel, M. Schellmann, L. Thiele, T.Wirth, T. Haustein, O. Koch, W. Zirwas, and E. Schulz, 'Interference-aware scheduling in the multiuser MIMO-OFDM downlink,' IEEE Communications Magazine, vol. 47, no. 6, pp. 56-66, June 2009"; and "S. Venkatesan, H. Huang, A. Lozano, and R. Valenzuela, 'A WiMAX based implementation of network MIMO for indoor wireless systems,' EURASIP Journal on Advances in Signal Processing, 2009") and inter-cell coordination ("W. Choi and J. G. Andrews, 'The capacity gain from intercell scheduling in multi-antenna systems,' IEEE Transactions on Wireless Communications, vol. 7, no. 2, pp. 714-725, Feb. 2008", "J. G. Andrews, A. Ghosh, and R. W. Heath, 'Networked MIMO with clustered linear precoding,' IEEE Transactions on Wireless Communications, vol. 8, no. 4, pp. 1910-1921, Apr. 2009"), from the wireless point of view. The results show how to integrate the cooperation techniques into the wireless systems and demonstrate the possible performance gains. Other work covers the aspects of how to synchronize the components involved in the cooperation schemes ("V. Jungnickel, T. Wirth, M. Schellmann, T. Haustein, and W. Zirwas, 'Synchronization of cooperative base stations,' in Proc. IEEE Int. Symp. on Wireless Communication Systems (ISWCS), 2008, pp. 329-334"), how many Base Stations (BSs) need to cooperate to achieve the desired gains ("J. Hoydis, M. Kobayashi, and M. Debbah, 'On the optimal number of cooperative base stations in network MIMO systems,' Arxiv preprint arXiv:1003.0332, 2010"), how to deal with inter-cluster interference ("G. Caire, S. A. Ramprashad, and H. C. Papadopoulos, 'Rethinking network MIMO: Cost of CSIT, performance analysis, and architecture comparisons,' in Proc. IEEE Information Theory and Applications Workshop (ITA), Jan. 2010", e.g., by introducing overlapping cluster configurations, and how to efficiently collect Channel State Information (CSI) ("L. Thiele, M. Schellmann, S. Schiffermüller, V. Jungnickel, and W. Zirwas, 'Multi-cell channel estimation using virtual pilots,' in Proc. IEEE Vehicular Technology Conference (VTC), May 2008, pp. 1211-1215").

A further example is shown in "G. Caire, S.A. Ramprashad, H.C. Papadopoulos, C. Pepin, and C.E. Sundberg, 'Multiuser MIMO Downlink with Limited Inter-Cell Cooperation: Approximate Interference Alignment in Time, Frequency and Space,' Communication, Control, and Computing, 2008 46th Annual Allerton Conference on, 2008, p. 730-737".

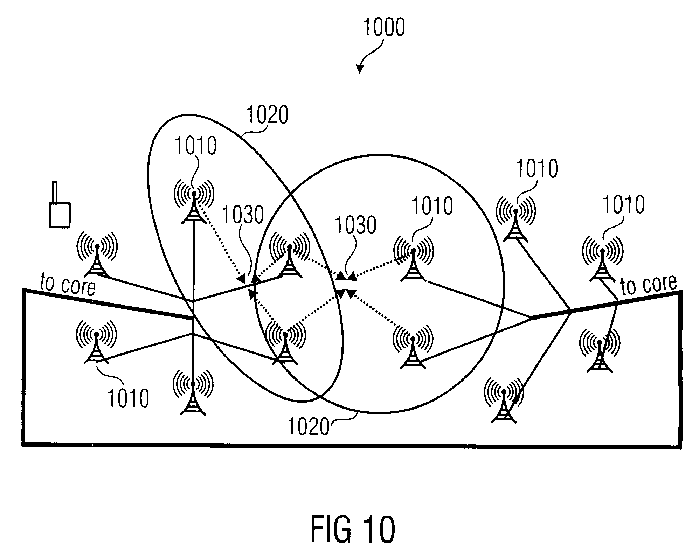

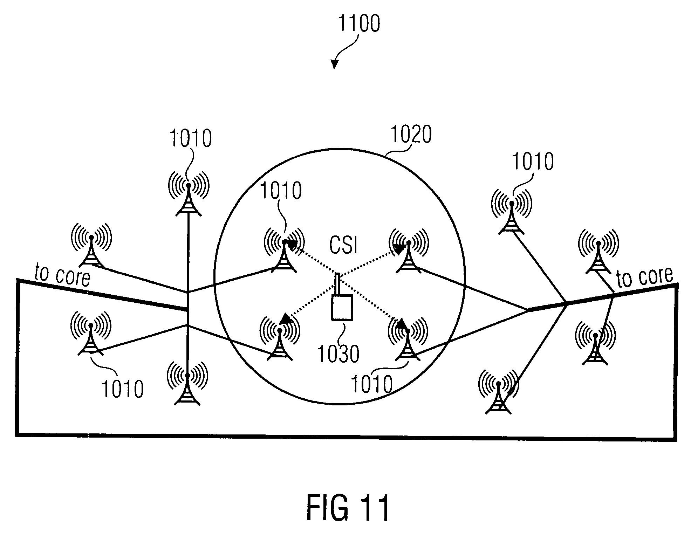

An example of a configuration1000 of a cooperative cellular network is shown in Fig. 10. Multiple base stations (BS) 1010 in a cluster 1020 jointly serve a user 1030. Future cooperative networks will have much stricter requirements, since new cooperation techniques (e.g. CoMP, coordinated multipoint transmission, NW-MIMO, network multiple input multiple output) and higher base station density (more cluster candidates) may be available as well as higher user data rates may be required. Therefore, also much higher requirements towards the wireline network may be necessary. Consequently, the assumption that all clusters are feasible may not be true anymore. For a cooperative transmission, channel state information (CSI) is gathered for identifying the cooperative base station cluster as indicated for a wireless communication system 1100 in Fig. 11. The cluster computation is done based on this channel state information. This may be useless, because the cluster will not be feasible, as illustrated in Fig. 11. Therefore, consequences of infeasible clusters may be a waste of computational resources and capacity for signaling.

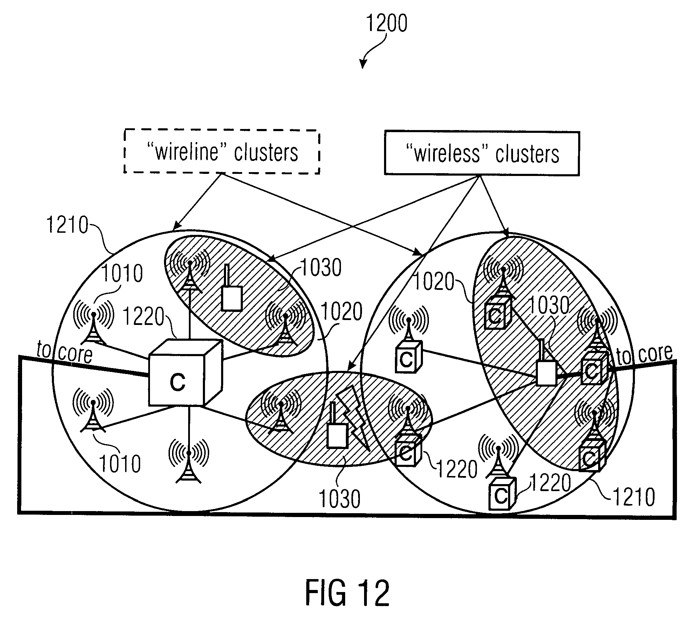

Accordingly, Fig. 12 shows a wireless communication system 1200 with some wireline clusters 1210 and some wireless clusters 1020. A wireline cluster 1210 may be controlled by a central control unit 1220 or some spreaded control units 1220. As it is shown, a wireless cluster 1020 cannot span over multiple wireline clusters 1210.

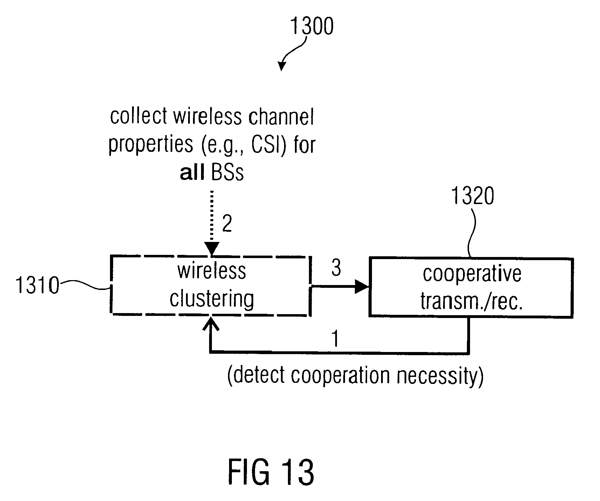

If a cooperation necessity is detected in such a wireless communication system, a wireless clustering 1310 is performed based on collected wireless channel properties (e.g. channel state information) for all base stations, as it is indicated in the example 1300 shown in Fig. 13. With this clustering a cooperative transmission or reception 1320 should be performed, although some wireless clusters may not be feasible due to limitations of the wireline core network.

It is the object of the present invention to provide an improved concept for determining a core network configuration of a wireless communication system, which allows to improve the wireless transmission capacity, to improve the flexibility of the configuration, to reduce the energy consumption and/or to reduce the costs.

This object is solved by an apparatus according to claim 1 or a method according to claim 14.

An embodiment of the invention provides an apparatus for determining a core network configuration of a wireless communication system. A core network of a wireless communication system comprises a plurality of base stations, a plurality of wireline links between the base stations and at least one control unit for controlling a cluster of base stations of the plurality of base stations. The apparatus comprises a cluster determiner configured to determine as the core network configuration at least one cluster of base stations linked by wireline links and controlled by a same control unit based on a predefined basic network configuration, so that latencies between each base station of the cluster and the control unit of the cluster are below a maximal allowable latency. The predefined basic network configuration represents information about all base stations of a core network to be configured and about possible wireline links between the base stations.

Embodiments according to the present invention are based on the central idea that constraints of the wireline core network of a wireless communication system are considered for determining the configuration of the core network. This concept may be applicable for planning new core networks of wireless communication systems as well as for a reconfiguration of existing core networks of wireless communication systems. With this approach feasible wireline clusters can be differentiated from infeasible wireline clusters. Therefore, unnecessary data transfer (e.g. collecting channel state information from infeasible clusters) can be reduced and therefore the wireless transmission capacity may be improved. Consequently, the energy consumption may be reduced. Further, by reconfiguring existing core networks, the flexibility of the core network configuration can be significantly improved. Additionally, by optimizing the clustering of the core network, the costs for building up new core networks or in terms of energy saving within existing core networks may be reduced.

The proposed concept considers a constraint of the wireline core network by determining the cluster of base stations, so that latencies between each base station of the cluster and the control unit of the cluster are below a maximal allowable latency. This is necessary, since channel state information received from wireless devices are only valid for a specific time interval, so that a cooperative transmission or reception should be performed within this time interval.

In some embodiments according to the invention, the cluster determiner is configured to consider more constraints of the core network than only the latencies (e.g. capacity of links or maximum size of a cluster).

Some embodiments according to the invention comprise a base station assigning unit, which assigns base stations of the core network to a control unit of the core network based on the determined core network configuration. In this way, the determined core network configuration is realized by the core network of the wireless communication system.

Some further embodiments according to the invention comprise a cooperation demand detector. The cooperation demand detector detects a demand of a cooperative transmission or a cooperative reception within the wireless communication system. This detected demand may trigger the cluster determiner to determine a new (optimized) core network configuration. In this way, the core network configuration may be adapted to different demands at different times.

Some embodiments according to the invention relate to a cluster determiner determining the at least one cluster based on a mixed integer linear program algorithm (MILP) or a breadth first search algorithm (BSS).

Embodiments according to the invention will be detailed subsequently referring to the appended drawings, in which:

Fig. 1 is a block diagram of an apparatus for determining a core network configuration of a wireless communication system;

Fig. 2a is a block diagram of an apparatus for determining a core network configuration of a wireless communication system;

Fig. 2b is a schematic illustration of a wireless communication system;

Fig. 3 is a schematic illustration of a wireline clustering and a wireless clustering triggered by a detected cooperation necessity;

Fig. 4a is a schematic illustration of a predefined basic network configuration with regular arrangement;

Fig. 4b is a schematic illustration of a predefined basic network configuration with irregular arrangements;

Fig. 5a is a schematic illustration of a core network configuration with a regular arrangement of the core network;

Fig. 5b is a schematic illustration of a core network configuration with an irregular arrangement of the core network;

Fig. 6 is a schematic illustration of a determined cluster of base stations;

Fig. 7a is a diagram indicating a solver runtime depending on an input scenario size;

Fig. 7b          is a diagram indicating a memory consumption depending on an input scenario size;

Fig. 8a          is a diagram indicating costs for a resulting network configuration depending on an input scenario size for a regular input scenario;

Fig. 8b          is a diagram indicating costs of a resulting network configuration depending on an input scenario size for an irregular input scenario;

Fig. 9           is a flow chart of a method for determining a core network configuration of a wireless communication system;

Fig. 10, 11, 12   are schematic illustrations of a wireless communication system; and

Fig. 13          is a schematic illustration of a known method for cooperative transmission or cooperative reception.

In the following, the same reference numerals are partly used for objects and functional units having the same or similar functional properties and the description thereof with regard to a figure shall apply also to other figures in order to reduce redundancy in the description of the embodiments.

The achieved gain by applying wireless cooperation techniques like Coordinated Multi-Point transmission (CoMP) or coordinated scheduling in cellular mobile access networks depends on the condition of the wireless channels between the base stations (BSs) and the user terminals (UTs). Depending on these channel properties, clusters of BS cells may be selected to perform the cooperation.

Besides the wireless properties, properties of the wireline backhaul and core network, like link delay, capacity, and load, may be taken into account when deciding how to set up the cooperating cell clusters, too. This is caused by the required exchange of control and user data traffic within cooperating cell sets as this data is transferred via the backhaul and core network. The data rate of this traffic will exceed that targeted capacity of 1 Gbit/s per BS of future backhaul networks, i.e., congestion scenarios that limit the wireless cooperation are likely to occur. For example, Fig. 12 illustrates an example for the relation between wireline and wireless clusters.

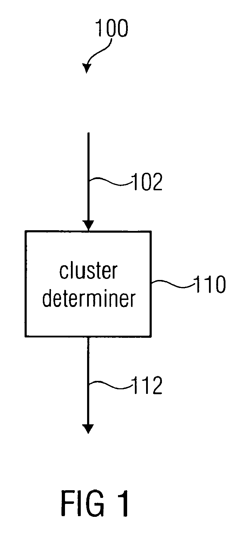

Fig. 1 shows a block diagram of an apparatus 100 for determining a core network configuration 112 of a wireless communication system according to an embodiment of the invention. A core network of a wireless communication system comprises a plurality of base stations, a plurality of wireline links between the base stations and at least one control unit for controlling a cluster of base stations of the plurality of base stations. The apparatus 100 comprises a cluster determiner 110. This cluster determiner 110 determines as the core network configuration 112 at least one cluster of base stations linked by wireline links and controlled by a same control unit based on a predefined basic network configuration 102, so that latencies between each base station of the cluster and the control unit of the cluster are below a maximal allowable latency. The predefined basic network configuration 102 represents information about all base stations of the core network to be configured and about possible wireline links between the base stations.

By considering the constraints of the wireline core network in terms of the latencies between the control unit and the base stations, the limitation of the wireline core network can be considered more accurate for determining clusters of base stations, which may then be used for a cooperative transmission or reception.

In comparison, known methods neglect the wireline network's properties (constraints) and an optimal network is assumed when selecting cells (base stations) for cooperation. This assumption, however, does not hold in reality as the properties of the wireline network influence the performance or even limit the feasibility of the wireless cooperation technique. Hence, wireless channel state information is collected and exchanged for clusters that can never be realized due to the wireline network's limitations. This causes unnecessary overhead (backhaul network traffic and computation load) which even more limits the cooperation opportunities.

Therefore, by using the inventive concept, the core network traffic can be reduced, so that more capacity is left for feasible cooperative transmission resulting in an increase of the wireless transmission capacity. Further, the energy consumption may be reduced, since the core network traffic and the computation load can be reduced. Additionally, the core network can be reconfigured to react on new load situations, which significantly improves the flexibility of the core network.

A core network, also called backhaul network, represents the wired part of a wireless communication system and comprises among others, base stations, control units (also called central controller or processing node) and wireline links between them. The base stations are distributed over an area to transmit or receive data from wireless devices (e.g. cell phone or laptop). The control units are usually located at base stations, but may also be placed independent from the base stations. Typically, there are fewer control units than base stations, although it may be possible that every base station comprises a control unit. A control unit may control one or more base stations and may be responsible for coordinating cooperative transmission or reception among others.

The latency between a base station and a control unit may be defined in several ways. Generally, it indicates a time between receiving a signal at a base station and receiving the signal or an information associated with the signal at the control unit or between a time a signal is transmitted from the control unit to the base station and receiving the signal at the base station. Alternatively, the latency may be the round trip time from receiving a signal at the base station, transmitting the signal to the control unit, receiving the signal at the control unit, processing the signal at the control unit, transmitting a response to the signal to the base station and receiving the response at the base station. For example, the base station receives channel state information from a wireless device, which is used by the control unit for precoding data. This precoded data is then transmitted as a response to the base station for transmitting the data to the wireless device. In this example, the maximal allowable latency may be the time interval, for which the received channel state information is valid.

The predefined basic network configuration 102 represents an input scenario of a core network to be configured. This may be, for example, a number and/or positions of base stations of the core network and possible wireline links between these base stations, for a new network to be planned. Alternatively, the predefined basic network configuration 102 may contain information about positions of base stations of a core network, the wireline links between the base stations and positions of one or more control units of an existing core network to be reconfigured, for example. In which format this information is provided to the cluster determiner 110 is not important as long as the cluster determiner 110 can process this data. For example, the predefined basic network configuration 102 may be a graph that comprises a vertex for each base station and an edge for each link between the base stations of the core network.

For the reconfiguration of an existing core network, the predefined basic network configuration 102 may represent the existing core network. In this example, the predefined basic network configuration 102 may further represent information about all control units of the core network (e.g. the positions of the control units in the core network) and about possible wireline links between base stations and the control units. If the control units are located at base stations, the possible wireline links between base stations and the control units may be a partial set of the possible wireline links between the base stations.

In some embodiments of the invention more constraints of the wireline core network than only the latencies may be considered. For example, a limitation of the capacity of the wireline links may be considered. In other words, the cluster determiner 110 may determine the at least one cluster, so that a capacity of all wireline links between base stations and between a base station and the control unit is larger than a required capacity. In this connection, the capacity of a link represents a maximal data rate or a maximal remaining data rate (if a current load is considered), which can be realized through the wireline link. As mentioned, a current load or a mean load of a link or the whole core network can also be considered, which may be especially of interest for a reconfiguration of an existing core network. In other words, the cluster determiner 110 may determine the at least one cluster, so that the capacity of all wireline links between base stations and between a base station and a control unit under consideration of a current or a mean load of the core network is larger than a required capacity.

Considering a current or mean load of a core network may result in different core network configurations. In this way, the core network can be adapted to different load situations, so that the data transfer and/or the energy consumption can be optimized. For example, the cluster determiner 110 may determine a first core network configuration 112 under consideration of a first load of the core network at the first time and a second core network configuration 112 under consideration of a second load of the core network at the second time. For some different load situations, the first determined core network configuration 112 may be different from the second determined core network configuration 112.

Further, a cost function of the core network may be considered. This cost function may represent a property of the core network as for example the energy consumption or monetary costs for building up the core network or for operating the core network. In this example, the core network configuration 112 may be determined, so that the cost function of the core network is optimized. Depending on the used optimization algorithm, the optimization of the cost function will result in the actual minimum or maximum of the cost function or result in a minimal solution (which may not be the actual minimum or maximum) found after a predefined number of iterations or a predefined calculation time, for example. In other words, the cluster determiner 110 may determine the at least one cluster, so that a cost function of the core network to be configured is optimized.

Usually, a core network of a wireless communication system comprises more base stations than a number of a base stations controllable by a single control unit. Therefore, the cluster determiner 110 may determine more than one cluster of base stations to obtain the core network configuration 112. In other words, the cluster determiner 110 may determine a plurality of clusters of base stations linked by wireline links and controlled by a respective control unit based on the predefined basic network configuration 102, so that each base station of the core network is contained by one of the determined clusters and all latencies between the base stations and the respective control unit of the cluster are below the maximal allowable latency.

The clusters of the core network configuration can be determined based on a variety of different optimization algorithms. For example, the cluster determiner 110 may determine the at least one cluster based on a mixed integer linear program algorithm (MILP) or a breadth-first-search-algorithm (BFS).

One basic approach may be to position a control unit some base stations away from the border of the core network. The border of a core network may be formed by base stations located at the edge of the core network (e.g. other base stations of the core network are only located at one side of these base stations). The number of base stations between the control unit and the base station at the border of the core network may depend on the maximal allowable latency. In other words, the cluster determiner 110 may determine a position of a control unit of the at least one cluster to be determined based on the predefined basic network configuration 102, so that the number of base stations between the control unit and the base station at the border of the core network is maximal while the latency between the control unit and the base station at the border of the core network is below the maximal allowable latency. Further, other constraints of the core network (e.g. capacity and/or cost function as mentioned above) may also be considered, so that the number of base stations between a control unit and a base station at the border of the core network is maximal while considering also these one or more constraints of the core network.

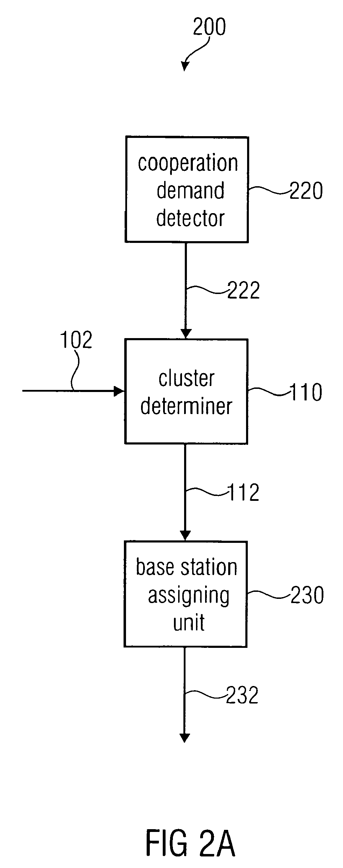

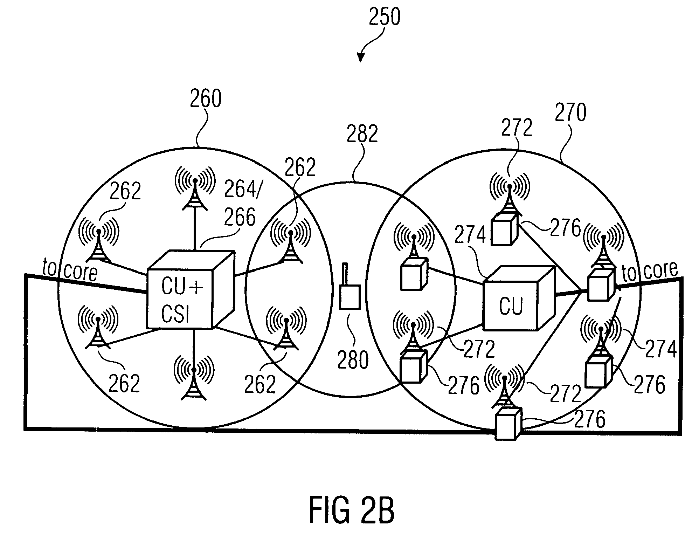

Fig. 2 shows an apparatus 200 for determining a core network configuration 112 of a wireless communication system according to an embodiment of the invention. The apparatus 200 is similar to the apparatus shown in Fig. 1, but comprises additionally an optional cooperation demand detector 220 and/or an optional base station assigning unit 230. The optional cooperation demand detector 220 is connected to the cluster determiner 110 and the cluster determiner 110 is connected to the optional base station assigning unit 230.

The cooperation demand detector 220 may detect a demand 222 of a cooperative transmission or cooperative reception within the wireless communication system. This detected demand 222 of cooperative transmission or cooperative reception may trigger the determination of a (new or optimized) core network configuration by the cluster determiner 110. In this way, a new core network configuration may be determined, which takes into account the detected demand of a cooperative transmission or cooperative reception. For example, a data rate of the wireless connection to a wireless device demanding a high data rate may be detected and the core network may be adapted to this current demand of the wireless device within the range of the wireless communication system.

The base station assigning unit 230 may assign base stations of the core network to a control unit of the core network based on a determined core network configuration to obtain a cluster 232 of assigned base stations. In this way, a current core network configuration may be updated to a new core network configuration by assigning the base stations of a core network to the control units of the core network according to the new determined core network configuration. Thus, varying conditions in terms of demands of cooperative transmissions, cooperative receptions or a current load of the core network can be taken into account. In other words, the base station assigning unit 230 may adapt the core network according to the determined core network configuration.

The cooperation demand detector 220 and the base station assigning unit 230 may be optional parts of the apparatus 200 and may be implemented both together or independent from each other.

Some embodiments according to the invention relate to a wireless communication system with a core network comprising a plurality of base stations, a plurality of wireline links between the base stations and at least one control unit for controlling a cluster of base stations of the plurality of base stations. The wireless communication system comprises an apparatus for determining a core network configuration of a wireless communication system as mentioned above and at least one channel state information determiner. At least one channel state information determiner may determine channel state information between a base station and a wireless device for each base station of a determined cluster located within a transmission range of the wireless device. Further, no channel state information is determined for at least one base station of the core network located within the transmission range of the wireless device not being contained by the determined cluster.

In this way, unnecessary data transfer of channel state information between a wireless device and a base station not contained by the determined cluster can be avoided. So, unnecessary data transfer can be reduced and this saved capacity may be used for other data.

Fig. 2b shows an example of a wireless communications system 250 comprising two clusters of base stations. The first cluster 260 of base stations 262 shows an example for base stations controlled by a central control unit 264 comprising additionally a central channel state information determiner 266. This channel state information determiner 266 may control the determination of channel state information for each base station 262 controlled by the control unit 264. Further, the second cluster 270 of base stations 272 illustrates an example for base stations 272 controlled by a central control unit 274 and a plurality of channel state information determiners 276 located one at each base station 272 of the cluster 270. Each channel state information determiner 272 controls the determination of channel state information of the respective base station 272 in this example. Then, the channel state information may be collected by the control unit 274 and may be used, for example, for a joint precoding of data to be sent to a wireless device 280. Further, Fig. 2b indicates a wireless device 280 with its transmission range 282. The transmission range 282 may be, for example, the area in which the wireless device 280 reaches a sufficient signal strength for base stations. In this example, two base stations 262 of the first cluster 260 and two base stations 272 of the second cluster 270 are within the transmission range 282 of the wireless device 280. Due to the core network configuration, it is not possible to establish a cooperative transmission by all four base stations within transmission range 282 of the wireless device 280. Therefore, it may be sufficient to determine channel state information for the two base stations 262 of the first cluster 260 while no channel state information is determined for the two base stations 272 within the transmission range 282 of the second cluster 270. In this way, unnecessary data transfer within the second cluster 270 can be reduced. In this example, the at least one channel state information determiner 266 may determine only channel state information for each base station of the cluster located within the transmission range 282 of the wireless device 280 without determining channel state information for a base station being not contained by the cluster 260. Alternatively, only the base stations 272 of the second cluster 270 may determine channel state information of the wireless device 280.

For a cooperative transmission or a cooperative reception base stations contained by a same cluster located within the transmission range of a wireless device may be determined to form a subcluster for the cooperative transmission or cooperative reception. In other words, the cluster determiner 110 or a control unit of a cluster may determine base stations contained by a same cluster of the core network and located within the transmission range of the wireless device to obtain a subcluster of base stations. Further, the cluster determiner 110 or the control unit of the cluster may determine base stations of the sub cluster (e.g. only one, some or all base stations of the sub cluster) being able to perform a cooperative transmission to the wireless device or a cooperative reception from the wireless device.

In general, the cluster determiner 110, the cooperation demand detector 220, the base station assigning unit 230 and/or the one or more channel state information determiner 266, 276 may be independent hardware units or part of a computer, digital signal processor or microcontroller as well as a computer program or a software product for running on a computer, digital signal processor or microcontroller.

In the following, examples for the determination of a core network configuration are described in more detail. Although different aspects of the invention are described together in these detailed examples, the different aspects may also be realized independent from each other.

How and where to apply wireless cooperation techniques, like Coordinated Multi-Point Transmission (CoMP) or joint scheduling, does not only depend on the wireless channel conditions but also on the design and current state (e.g., load) of the mobile access network's wireline part. For example, this may be mainly caused by the capacity and latency requirements, which have to be fulfilled on the wireline side to permit cooperation on the wireless side.

The proposed concept may enable to design the wireline part of a mobile access network such that the desired wireless cooperation technique can be applied in the whole network. This design step happens before the network is deployed. Further, the proposed concept may enable to find clusters in a running mobile access network in which the desired wireless cooperation technique can be applied at a given point in time (depending on, e.g., the current load). Finding these clusters may be done in regular intervals (on a time scale of seconds) while the network is operating. Within the found wireline clusters, actual wireless clusters (sub clusters) may be chosen depending on the wireless channel conditions (on a time scale of single wireless frames).

For example, a heuristic algorithm that determines a core network configuration while providing a solution quality that is close to the optimum may be described in the following. Due to the algorithm's high efficiency (less than 1 second runtime compared to 20 hours for the optimal solution) it can be applied in the required time scales. Hence, the important aspect of wireline restrictions for wireless cooperation techniques can be taken into account to improve their performance and to decrease their implementation overhead.

The wireline network may be designed or reconfigured such that it can be assumed to be optimal for a certain (set of) wireless cooperation techniques. This can happen offline, i.e., before the cooperative network is deployed, and to a certain extent also online, i.e., while the network is operating after it has been deployed.

Further, for example, it may be accepted that the wireline network is suboptimal at some places. To deal with this, the decision process on how to choose cooperating cell clusters is supported by information about the wireline network part in addition to the wireless channel conditions. This may happen online, i.e., while the network is operating.

Due to changes that occur during the network's lifetime, like equipment failures or changing traffic load, a reconfiguration may be advantageous. Especially, the changing traffic load in the network is challenging as it changes on time scales even below one second.

Both approaches can be solved by formulating them as a mathematical optimization problem. Solving these optimization problems, however, may be NP-complete and takes up to 20 hours for just small input scenarios that consist of 50 cells (base stations). This long runtime makes it impossible to use this solution approach for real, large networks and to use the approaches online, i.e., while the cooperative network is running.

Alternatively, a heuristic algorithm that approximates the optimal solution at reduced runtime and memory requirements is proposed.

For example, to be able to use wireless cooperation techniques in real networks, the scenarios described above, have to be solved. The design or reconfiguration of the wireline network may usually be solved once at the design time of the network. Include information about the wireline network part in addition to the wireless channel conditions when choosing cooperating cell clusters may be solved in regular intervals during the network's lifetime to react on changes in the network, like varying load.

First, an algorithm that solves the network design problem is proposed, for example. As input, the algorithm takes the locations of all cells (e.g. a cell may be the area controlled by a base station or the base station itself) and the possible interconnections (wireline links) between them. In this context, interconnection between cells means that there is a link between the base stations that control the cells. This input can be, e.g., defined as a graph that contains a node (base station) for each cell and an edge for each possible interconnection between the cells. Nodes and edges may have properties that describe their requirements and capabilities, e.g., the required bandwidth of a cell or the capacity of an interconnecting link. Furthermore, a set of constraints may be provided as input, e.g., required capacity on the wireline side or maximum tolerable (allowable) latency between cooperating cells (base stations). These constraints may be imposed by the desired wireless cooperation technique and need to be fulfilled in each valid solution of the problem, for example.

The proposed algorithm may determine where to optimally position common functions like controllers or processing nodes (control units) within the network. These locations depend on the aforementioned requirements of the wireless cooperation technique. Further, the algorithm may decide how to cluster the cells and how to interconnect the cells within the clusters based on the given possible interconnections (links). All these decisions may be done such that a desired cost metric, like monetary costs, system performance, or energy consumption, is optimized.

For finding feasible clusters in a running (existing) network, the just described algorithm may be slightly modified. Instead of calculating optimal positions for controller/processing nodes in the network, they are fixed and given as additional input parameters. The same is done for the interconnections between the cells. Using this information, the algorithm may just calculate all largest possible *wireline* clusters for a certain cooperation technique based on the given network configuration, its current state (e.g., load), and the technique's constraints, for example. Within these possible clusters, cells can be selected for cooperation according to the wireless channel conditions. Note that such *wireless* clusters cannot span over multiple of the found *wireline* clusters as requirements of the cooperation technique would not be fulfilled (e.g. Fig. 12).

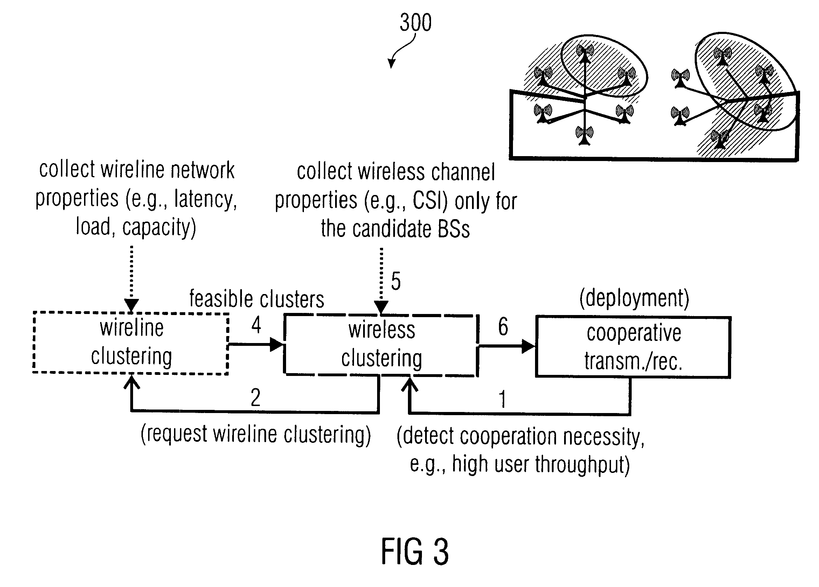

An example of an overview 300 of such a system that incorporates both *wireline* and *wireless* information for clustering is illustrated in Fig. 3. After finding out that cooperation is needed (1), the wireline clustering is triggered (2) based on the current network state (3). The resulting clusters are passed to the wireless clustering mechanism (4) that only considers the feasible clusters and hence only collects wireless channel properties for BSs that are in the feasible clusters (5). In the last step, the calculated clusters are deployed in the network (6).

In this way, infrastructure costs may be reduced. Wireless cooperation techniques have constraints towards the wireline part of the network, e.g., in terms of capacity or latency. These constraints must not be violated, otherwise gains on the wireless side may diminish or cooperation may even be impossible. This means without using the proposed concept, wireless cooperation techniques can only be exploited with a heavily over-provisioned wireline part (core network) of the mobile access network (wireless communication system). This, however, is not desirable from a network operator's point of view as over-provisioning results in expensive, unused resources. Hence, the proposed concept may lead to cost savings for mobile network operators.

Further, the CoMP performance may be increased. For the *wireless* clustering channel state information (CSI) may need to be gathered from all candidate cells. This not only causes non-neglectable overhead on the wireless side but also on the wireline side as the collected information has to be exchanged between the candidate cells via the backhaul network. Both of these overheads are reduced when using the proposed concept for wireline pre-clustering as this lowers the number of candidate cells for which CSI has to be collected.

Additionally, the computational complexity may be reduced.

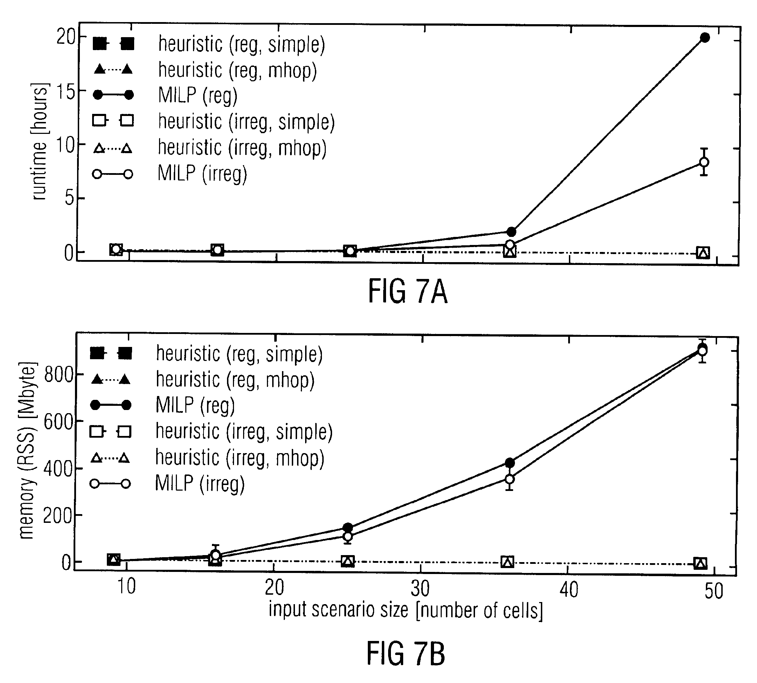

Theoretically, the a core network configuration may be determined by mathematical optimization and formulating of a Mixed Integer Linear Program (MILP), for example. Solving MILPs, however, is NP-complete, which prohibits to use this solution approach due to the high runtime, if a solution within a time scale of seconds is required. Compared to the core network configuration optimally with a MILP, a heuristic method may has a substantially shorter runtime and a much lower memory footprint. An example for the difference is illustrated in Fig. 7a and 7b. For this example, the MILP solver (cluster determiner using MILP) has been configured to accept an optimality gap of 10 %, i.e., the returned solution is at maximum 10 % worse than the optimal solution.

The plot shows that while the MILP solver runtime quickly increases to multiple hours for input scenarios consisting of more than 16 cells (base stations), the heuristic finishes after a runtime below one second.

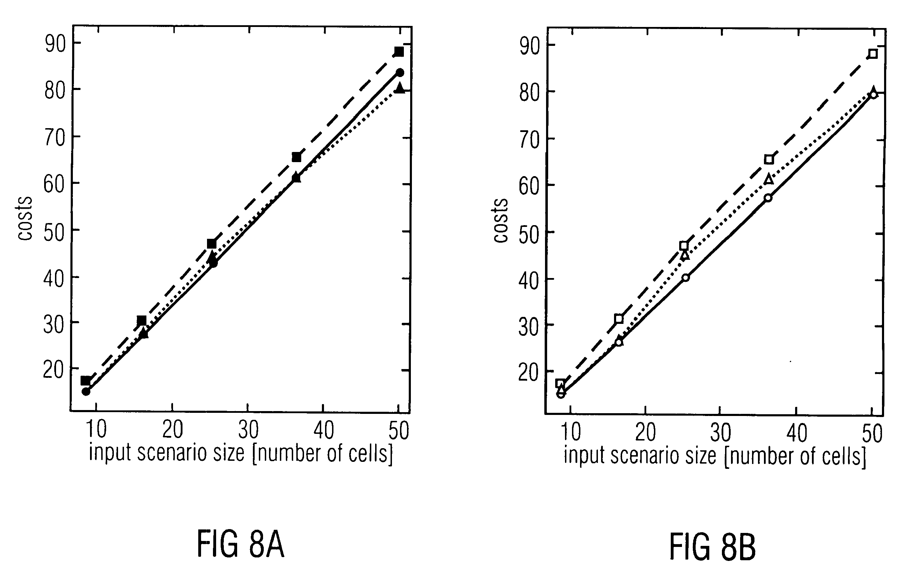

To get an idea of the quality of the heuristic's output, Fig. 8a and 8b compares the output given by the MILP solver (optimal solution) to the output of our proposed heuristic.

The returned output of the proposed (heuristic) concept is at maximum 5 % worse than the output provided by the MILP solver. For large scenarios, the result is even better than the one returned by the MILP. This is possible as the optimality gap of the MILP solver was set to 10% and the result of the heuristic is better than that.

To conclude, the proposed concept provides an output quality that is close to the optimal solution. The runtime and the memory requirements, however, are significantly lower compared to the ones of a MILP solver. These advantages make it possible to use the proposed (heuristic) concept offline and online on time scales below one second.

For example, in the offline case, the input scenario is provided to the heuristic, the heuristic calculates the optimal network configuration, and the output is used to deploy a network setup that supports the desired wireless cooperation technique. All these steps are done *before* the cooperative network setup is actually deployed. This application is similar to the task of network planning.

In the online case, the cooperative network has already been deployed. Input data for the heuristic is collected during the runtime of the network, e.g., to check for failures, or to detect situations where intentionally changing the network configuration might be beneficial. A good example for this are low-load situations during night where switching off (parts of) some base stations to save energy can be beneficial. Calculating alternative network configurations on the fly in the mentioned situations can be done with the proposed concept, thanks to its very low runtime and resource consumption.

For designing or reconfiguring the wireline network, a greedy method may be used that is summarized as pseudo code below. An unassigned cell is a cell that has not been added to a cooperative cluster of cells yet.

While there are unassigned cells in the input graph, do:

● Choose new controller/processor C (control unit) from the unassigned cells (base stations)

   o Select C such that its distance to the border of the graph (predefined basic network configuration) equals the expected radius of the resulting cluster

     - Depends on constraints (e.g., max. possible cluster size, link capacities, link latencies)

● Start modified breadth-first-search (BFS) from C (control unit)

   o If a newly found cell X (base station) can be controlled by C without breaking constraints:

     - Add X (base station) to the cluster controlled by C (control unit)
     - Remove X (base station) and its adjacent links from the input graph (predefined basic network configuration)

The method starts with the input graph (predefined basic network configuration) that contains only unassigned cells (base stations), i.e., they all do not belong to a cluster so far. From this set of cells, the heuristic selects one cell C where a controller/processor function (control unit) will be collocated. This selection process is done such that the distance from C (control unit) to the border of the input graph equals the expected radius of the resulting cluster. This way, asymmetric cluster shapes and cuttings may be avoided, for example.

The size (end hence the radius) of the resulting cluster may depend on different things, for example, the physical properties of the involved cells and their interconnections (load, latency, etc.), and the constraints that are imposed by the wireless cooperation technique. For example, for joint precoding there may be two constraints that have to be fulfilled. The first one is that the latency from measuring the CSI until the point in time where the jointly encoded data is sent must be below a certain limit (e.g., 1 ms for LTE). Hence, the processing delay at the controller (control unit) and the RTT (round trip time) from the controller to the controlled cells (base stations) must not exceed this limit. Accordingly, the expected cluster size regarding the latency cs_exp_lat can be calculated as shown in Equation (a), where max_twoway_delay is the maximum amount of time from measuring the CSI (channel state information) to the actual sending of the data, ctrl_proc_delay is the processing delay at the controller, and mean_link_lat is the mean link latency in the input graph (predefined basic network configuration).

```
cs_exp_lat = (max_twoway_delay - ctrl_proc_delay) / (2*mean_link_lat)    (a)
```

The second limitation of joint precoding may be that the links from the controller to the controlled cells must have enough capacity to transport the signals to the respective cells from where they are sent. So the amount of bandwidth that is required at each controlled cell and the link capacities from the controller to the cells may limit the maximum possible cluster size, too. For example, equation (b) shows how to calculate the expected cluster size cs_exp_bw using the mean bandwidth capacity of the links mean_link_bw_cap and the mean bandwidth requirements of the cells mean_cell_bw_req in the input graph.

```
cs_exp_bw = mean_link_bw_cap / mean_cell_bw_req        (b)
```

As a result, the overall expected cluster size cs_exp is the minimum of the two values calculated in Equation (a) and (b). Hence, the expected cluster size in number of cell hops can eventually be calculated according to Equation (c).

$$\text{cs\_exp} = \min(\text{cs\_exp\_lat}, \text{cs\_exp\_bw}) \qquad (c)$$

The calculation of the expected cluster size of course changes for different kinds of wireless cooperation as they might have different constraints that have to be fulfilled.

After the new controller C (control unit) has been selected from the input graph, a BFS is started with C as start node. Whenever the BFS algorithm traverses a link and finds a new cell (base station) in the input graph, it is checked whether it can be added to the current cluster without violating any constraint. If this is possible, the cell is added to the current cluster and the cell and all adjacent links are removed from the input graph. If adding it to the cluster is not possible, the cell is kept in the input graph. After this, the BFS algorithm continues to examine the next unvisited cell in the input graph. As soon as the BFS terminates, a new cluster has been created.

After the BFS has terminated, a new controller C is selected from the remaining input graph and the described procedure restarts from the beginning. These steps are repeated until there are no remaining nodes in the input graph.

For finding feasible clusters in a running network (wireline pre-clustering), the algorithm described before may be slightly modified. The locations of the controller/processing nodes (control units) and the interconnections (links) between the cells (which may be both part of the output of the algorithm described above) are now given as additional input parameters. Based on this extended input (predefined basic network configuration), the algorithm below may be used to find all possible clusters from the wireline network's point of view.

For each cell C, do:

● Start modified breadth-first-search (BFS) from C

    o If a newly found cell X can be controlled by the controller/processing node of C without breaking constraints:

        - Add X to the cluster controlled by C

The algorithm may iterate over all cells (base stations) that are contained in the input graph (predefined basic network configuration). For each of these cells, a wireline cluster is created. This may be done, as in the algorithm described above, using a modified BFS that adds neighboring cells to the new cluster whenever no constraints are violated. This way, the wireline clusters may grow as large as possible to permit as many wireless clusters as possible eventually.

The proposed concept may be used in connection with mobile access networks, mobile network architecture, wireless cooperation, network-MIMO, CoMP, wireless access network, cellular network and/or cooperation.

The proposed concept can be used to efficiently calculate cost optimized network configurations for cooperative mobile access networks, for example. This way, e.g. CoMP techniques, may be simplified as the proposed concept may provide precalculated, cost optimized (e.g. monetary, energy) cooperation clusters based on wired network properties.

In the following, further detailed examples for determining a core network configuration are described. As mentioned before, different optional aspects (e.g. different considered core network constraints) of the invention described in one embodiment may also be implemented independent from each other.

The common denominator of most cooperation techniques are central controller or processing nodes (control units) that are located within the core or backhaul network. One problem that operators face when deploying cooperation techniques is where to optimally place controller/processing nodes in the network and how to connect them to the clustered base stations. For this, requirements of the cooperation technique and properties of the network infrastructure have to be taken into account. If not, the wireless performance decreases or cooperation is even impossible.

Clustering cooperative BS (base station) sets, necessary for achieving the desired wireless performance, poses several challenges in the backhaul architecture design. Depending on the used cooperation scheme, a central controller and/or processing node and a set of cooperating BSs need to exchange signaling and sometimes user data traffic.

The placement of these controller/processing nodes and their connection to the cooperating BSs play a crucial role in the overall backhaul architecture design. System parameters like propagation delay in the wired part of the network, required link capacity for transporting user data and control information, synchronization between cooperative BSs, Capital Expense (CAPEX) and Operating Expense (OPEX) of the backhaul architecture need to be taken into account, for example.

Given a set of BSs and their (potential) interconnections, an optimal positioning of controller/processing nodes in the network and assigning of BSs to these nodes is determined.

For this, the parameters shown in the table below may be used to define the input scenario. These parameters define a graph that has a vertex for each BS $b \in B$ and an edge for each link $1 \in L$ between the BSs. All vertices and edges may be augmented with properties, like capacity and latency, that are important for the network design process. Additionally, in this example, there are four global properties ($cs_{min}$, $cs_{max}$, $t_{proc}$, and $t_{max}$) that are independent of BSs or links.

| | |
|---|---|
| $B$ | Set of BSs |
| $L$ | Set of links, where $L \subseteq B \times B$ |
| $b\_costF_u$ | Fixed costs for setting up a controller at BS $u \in B$ |
| $b\_costC_u$ | Costs per controlled BS for a controller at BS $u \in B$ |
| $b\_cap_u$ | Required capacity (e.g., bandwidth/data rate) at BS $u \in B$ |
| $l\_cap_{u,v}$ | Capacity (e.g., bandwidth/data rate) of link $(u, v) \in L$ |
| $1\_t_{u,v}$ | Latency of link $(u, v) \in L$ |
| $1\_cost_{u,v}$ | Costs of link $(u, v) \in L$ |
| $cs_{min}$ | Minimum required cluster size |
| $cs_{max}$ | Maximum allowed cluster size |
| $t_{proc}$ | Processing time at controller |
| $t_{max}$ | Maximum total latency from BS to controller |

Further, a Mixed Integer Linear Program (MILP) that may optimally solve the network design may be introduced. Based on the input, the MILP calculates optimal positions for the controller/processing nodes and assigns BSs to these nodes while minimizing costs. This assignment may lead to the optimal interconnection of all BSs.

In the following, monetary costs may be used as optimization goal. This can easily be adapted to a different cost metric like energy consumption.

The MILP uses the parameters from the table above as input and uses the variables shown in the table below to optimize the metric.

| | |
|---|---|
| $1\_act_{u,v}$ | Determines whether link $(u, v) \in L$ is active, $1\_act_{u,v} \in \{0,1\}$ |
| $b\_act_u$ | Determines whether a controller/ processing node is collocated at BS $u \in B$, $b\_act_u \in \{0,1\}$ |
| $f_{s,d,u,v}$ | Determines whether a data flow from a controller/processing node at $s \in B$ goes to $d \in B$ over link $(u, v) \in L$, $f_{s,d,u,v} \in \{0,1\}$ |
| $b\_actCostF_u$ | Actual fixed controller/processor costs at $u \in B$, $b\_actCostF_u \geq 0$ |
| $b\_actCostC_u$ | Actual controller/processor costs per each controlled cell at $u \in B$, $b\_actCostC_u \geq 0$ |
| $1\_actCost_{u,v}$ | Actual costs for link $(u, v) \in L$, $1\_actCost_{u,v} \geq 0$ |

Setting $1\_act_{u,v}$ to 1 means that the link $(u, v)$ transports some flow, i.e., there is at least one $f_{s,d,u,v}$ set to 1. Similar to this, if $b\_act_u$ is set to 1, a controller/processing function is collocated at BS u. At the moment, the MILP supports to collocate these functions at a BS, they cannot be positioned arbitrarily in the network.

The three variables $b\_actCostF_u$, $b\_actCostC_u$, and $1\_actCost_{u,v}$ contain the actual costs for controllers and links. These costs depend on whether a controller/processing node is actually collocated at a BS and on whether a link is active, i.e., used to connect clustered BSs, or not.

To get the total link and controller/processing node costs for a network configuration, the individual costs may be summed up. This is done, for example, in Eq. (1) and Eq. (2), respectively.

$$l\_cost_{total} = \sum_{(u,v) \in L} l\_actCost_{u,v} \qquad (1)$$

$$b\_cost_{total} = \sum_{u \in B} b\_actCostF_u + b\_actCostC_u \qquad (2)$$

The goal is to minimize the total costs while taking into account the constraints of the applied wireless cooperation scheme, defined by the parameters in the table above. The following MILP may achieve that:

$$\text{min.} \quad \text{b\_cost}_{\text{total}} + \text{l\_cost}_{\text{total}} \tag{3}$$

$$\text{s. t.} \quad \sum_{s \in B, (u,d) \in L} \text{f}_{s,d,u,d} = 1, \ \forall d \in B, \tag{4}$$

$$\text{s. t.} \quad \sum_{s \in B, (s,u) \in L} \text{f}_{s,d,s,u} = 1, \ \forall d \in B, \tag{5}$$

$$\text{s. t.} \quad \sum_{(v,u) \in L} \text{f}_{s,d,v,u} = \sum_{(u,w) \in L} \text{f}_{s,d,u,w},$$
$$\forall u \in B, (s,d) \in B \times B, u \neq s, u \neq d, \tag{6}$$

$$\text{s. t.} \quad \text{f}_{s,d,u,v} = 0, \forall (s,d,u,v) \in B \times B \times B \times B,$$
$$s \neq d, u = v, \tag{7}$$

$$\text{s. t.} \quad \text{l\_act}_{u,v} \cdot M \geq \sum_{(s,d) \in B \times B} \text{f}_{s,d,u,v}, \ \forall (u.v) \in L, \tag{8}$$

$$\text{s. t.} \quad \text{b\_act}_s \cdot M \geq \sum_{d \in B, (s,v) \in L} \text{f}_{s,d,s,v}, \ \forall s \in B, \tag{9}$$

$$\text{s. t.} \quad \sum_{(d,v) \in B \times B, (c,v) \in L} \text{f}_{c,d,c,v} \geq cs_{\min} \cdot \text{b\_act}_c,$$
$$\forall c \in B, \tag{10}$$

$$\text{s. t.} \quad \sum_{(d,v) \in B \times B, (c,v) \in L} \text{f}_{c,d,c,v} \leq cs_{\max}, \ \forall c \in B, \tag{11}$$

$$\text{s. t.} \quad \sum_{(s,d) \in B \times B} \text{f}_{s,d,u,v} \cdot \text{b\_cap}_d \leq \text{l\_cap}_{u,v},$$
$$\forall (u,v) \in L, \tag{12}$$

$$s.\ t. \qquad \sum_{(s,d)\in B\times B} f_{s,d,u,v} \cdot b\_cap_d \leq l\_cap_{u,v},$$

$$\forall (v,u) \in L, \qquad\qquad (13)$$

$$s.\ t. \qquad \sum_{(u,v)\in L} f_{s,d,u,v} \cdot (l\_t_{u,v} + l\_t_{v,u}) \leq t_{\max} - t_{\mathrm{proc}},$$

$$\forall (s,d) \in B \times B, \qquad\qquad (14)$$

$$s.\ t. \qquad b\_actCostF_c = b\_act_c \cdot b\_costF_c, \ \forall c \in B, \qquad (15)$$

$$s.\ t. \qquad b\_actCostC_c = \sum_{d\in B,(c,v)\in L} f_{c,d,c,v} \cdot b\_costC_c,$$

$$\forall c \in B, \qquad\qquad (16)$$

$$s.\ t. \qquad l\_actCost_{u,v} = l\_act_{u,v} \cdot l\_cost_{u,v}, \ \forall (u,v) \in L,$$

$$(17)$$

The first constraint in Eq. (4) ensures that each BS is assigned to exactly one controller. This is done by fixing the number of flows that end at each BS to 1. The second constraint, shown in Eq. (5), guarantees that each flow that ends at a BS also has a start BS - the controller. Eq. (6) contains the third constraint, which is necessary to create the flows in the network. It guarantees the flow balance, i.e., whenever a flow enters a node it also has to leave it again, except the node is the flow's source or destination. Finally, Eq. (7) forbids local loops for each flow.

After having created the flows between the controllers and the BSs, the helper constraint in Eq. (8) activates all links in the network that are required to transport one of the flows. This constraint uses a "big-M constant" to achieve this. Similarly, Eq. (9) activates the controller functionality at each BS that is source of at least one flow.

As many cooperation schemes, like joint precoding, require a minimum amount of BSs being jointly controlled to achieve the desired gains, the constraint in Eq. (10) requires at least $cs_{min}$ BSs to be connected to the same controller. At the same time, Eq. (11) limits the maximum cluster size to $cs_{max}$. This might be useful in case the controller capacities are limited and hence clusters cannot exceed a certain size.

The constraints in Eq. (12) and Eq. (13) ensure that the link capacities are not exceeded in the downlink (from controller to the BS) and in the uplink, respectively.

The next constraint in Eq. (14) ensures that the round-trip delay between a controller and a BS is below an upper bound. This bound is calculated by subtracting the required processing time $t_{proc}$ at the controller from the maximum allowed delay $t_{max}$. Such a constraint is important, e.g., for joint precoding. Here, the encoded data must be sent while the CSI, based on which the encoding was done, is still valid.

Finally, the last three constraints calculate the link and controller costs for the resulting network. Eq. (15) and Eq. (16) define the fixed and dynamic controller costs. Eq. (17) sets the costs for each link depending on whether it is active or not.

The mentioned constraints may be considered all together, as shown in this example, or one or more of them may be considered independent from or without the others

In this example, a cluster determiner described above may be configured to solve the described MILP problem to obtain the core network configuration.

The presented MILP may return the optimal solution for designing or reconfiguring a core network. Finding such a solution, however, is NP-hard and requires a long solver runtime.

To overcome the MILP's runtime problem, a heuristic to approximate the optimal solution is proposed. The heuristic take the same input (predefined basic network configuration) as the MILP (i.e., a property graph containing the BSs and potential interconnections) and produces the same kind of output (core network configuration) as the MILP (a graph containing all BSs, locations of controllers/processors, and the optimized interconnections between these components).

For example, a greedy approach based on a modified Breadth First Search (BFS) algorithm may be used to build clusters of BSs. A resulting heuristic is summarized in Alg. 1.

| **Algorithm 1** CONFIGURECOOPNETWORK($G_{in}$) |
| --- |
| 1: $\quad\quad\quad\quad\quad\quad$ $G_{out} = \phi$ // initialize output graph with empty set |
| 2: $\quad\quad\quad\quad\quad\quad$ **while** NUM_VERTICES($G_{in}$) > 0 **do** |
| 3: $\quad\quad\quad\quad\quad\quad\quad\quad$ $c$ = CHOOSECONTROLLER($G_{in}$) |
| 4: $\quad\quad\quad\quad\quad\quad\quad\quad$ $G_{newClust}$ = BFS'($G_m. c$) // calculate new cluster |
| 5: $\quad\quad\quad\quad\quad\quad\quad\quad$ $G_{out} = G_{out} \cup G_{newClust}$ // add new cluster to $G_{out}$ |
| 6: $\quad\quad\quad\quad\quad\quad\quad\quad$ $G_{in} = G_m \setminus G_{newClust}$ // remove new cluster from $G_m$ |
| 7: $\quad\quad\quad\quad\quad\quad$ **end while** |
| 8: $\quad\quad\quad\quad\quad\quad$ **return** $G_{out}$ |

The method CONFIGURECOOPNETWORK expects the input parameter $G_{in}$. This is the input graph (predefined basic network configuration) of BSs and potential interconnections (links). The algorithm first initializes the output graph $G_{out}$ (core network configuration). After this, it traverses a loop where in each iteration one new cluster is created and added to $G_{out}$. Furthermore, BSs that have been assigned to a cluster are removed from $G_{in}$.

At the beginning of each iteration, one of the BSs in $G_{in}$ is selected that will act as a cluster controller (control unit). Starting from this new controller c, the BFS' algorithm builds the cluster around c and returns the resulting cluster graph $G_{newClust}$. This graph contains all BSs that are member of the cluster and links that connect these BSs to the controller c.

As it can be seen in the evaluation later, the way how to choose c from $G_{in}$ may play an important role for the quality of the heuristic's output. The method CHOOSECONTROLLER selects a BS from $G_{in}$ such that its distance to the border of $G_{in}$ equals the expected radius of the cluster that is currently created, for example.

The size (and hence the radius) of the resulting cluster depends on different things, for example, the physical properties of the involved BSs and their interconnections, and the constraints that are imposed by the wireless cooperation technique.

In the following, an example how this can be done for joint precoding as cooperation technique (Alg. 2) is given.

| **Algorithm 2** CHOOSECONTROLLER($G$) |
| --- |
| 1: $\quad\quad\quad$ $cr_{lat} = (t_{max} - t_{proc})/(2 \cdot \text{MEANLINKLATENCY}(G))$ |
| 2: $\quad\quad\quad$ $cr_{cap} = \text{MEANLINKCAPACITY}(G)/\text{MEANBSCAPACITYREQ}(G)$ |
| 3: $\quad\quad\quad$ $cr_{overall} = \text{MIN}(cr_{lat}, cr_{cap})$ // expected cluster radius (in hops) |
| 4: $\quad\quad\quad$ $c$ = GETNODENHOPSFROMBORDER($G$, $cr_{expected}$) |
| 5: $\quad\quad\quad$ **return** $c$ |

Joint precoding may has two major constraints that have to be fulfilled. The first one is that the latency from measuring the CSI until the point in time where the jointly encoded data is sent must be below an upper bound, e.g., 1 ms for Long Term Evolution (LTE). Hence, the processing delay at the controller and the Round Trip Time (RTT) from the controller to the controlled BSs must not exceed this limit. Accordingly, the expected cluster radius regarding the latency $cr_{lat}$ can be calculated as shown in the first line of Alg. 2. The parameters $t_{max}$ and $t_{proc}$ contain the maximum allowed time span from measuring the CSI to the actual sending of the data, and the processing delay at the controller, respectively (as defined in the table above). MEANLINKLATENCY calculates the mean link latency.

The second limitation for joint precoding may be that the links must have enough capacity to transport the signals from the controller to the BSs from where they are sent. So the amount of bandwidth that is required at each BS and the link capacities from the controller to the BSs (possibly involving multiple hops) limit the maximum possible cluster size, too. This is taken into account in line 2 of Alg. 2. There, the expected cluster radius depending on the capacity properties of the input graph $cr_{cap}$ is calculated. The radius depends on the mean link capacity and the mean capacity requirement of the BSs.

As a result, the overall expected cluster radius $cr_{overall}$ is the minimum of $cr_{lat}$ and $cr_{cap}$. Using $cr_{overall}$ as input, the method GETNODENHOPSFROMBORDER returns a BS from the input graph that is exactly $cr_{overall}$ hops away from the graph's border. This BS is the new controller.

Calculating the expected cluster radius may change for different kinds of wireless cooperation as they might have different constraints that have to be fulfilled.

Now that the heuristic has selected a new controller c from the input graph $G_m$ using CHOOSECONTROLLER, a modified BFS is started with c as start node. Compared to a standard BFS algorithm, whenever the BFS' algorithm traverses a link and finds a new BS x in $G_{in}$, it checks whether x can be added to the current cluster without violating any constraint. If this is possible, x is added to the current cluster and to the BFS's queue of BSs to continue the search from later on. If adding x to the cluster is not possible, the search algorithm does not continue searching for new BSs on this path of the search tree. As soon as the BFS algorithm terminates, a new cluster has been created around the controller c.

After the BFS has terminated, the new cluster (represented by $G_{newClust}$) is added to the output graph $G_{out}$ and removed from the input graph $G_{in}$. The loop continues with the next iteration until all BSs have been assigned to a cluster.

Next, an evaluation of solving the problem using the MILP and approximating the optimal solution using the heuristic algorithm is shown. In the following figures, all confidence intervals have been calculated for a confidence level of 95 %.

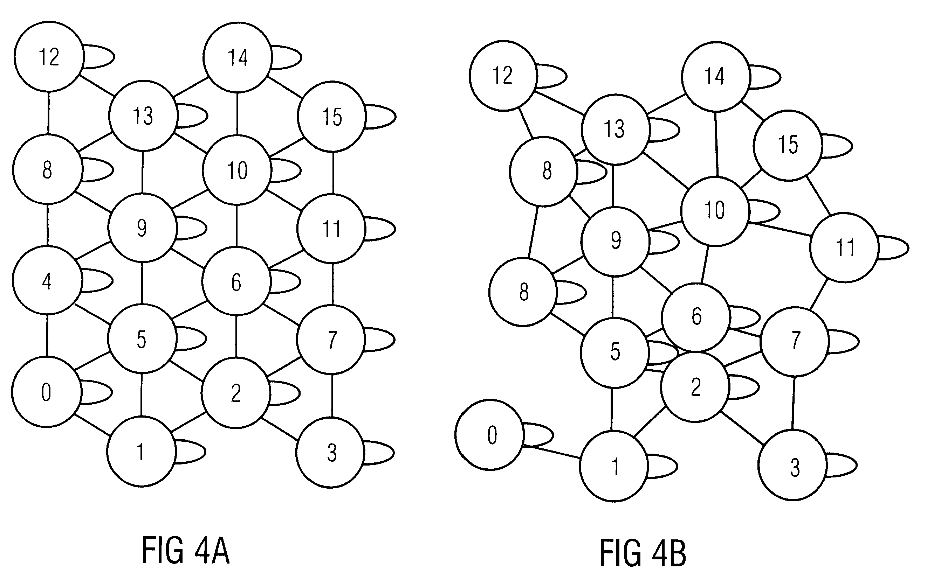

The input scenario consists of a matrix of n BSs that form a square. Two different arrangements of the BSs were considered. The first is a regular arrangement where all BSs have identical inter-BS distances of $\bar{s}=1600\cdot\sqrt{3}m\approx2771m$ ("A. Benjebbour, M. Shirakabe, Y. Ohwatari, J. Hagiwara, and T. Ohya, 'Evaluation of user throughput for MU-MIMO coordinated wireless networks,' in Proc. IEEE International Symposium on Personal, Indoor and Mobile Radio Communications (PIMRC), Sept. 2008") and have potential interconnections to all neighboring BSs. The second type of arrangement is irregular and adds randomness to the BS positioning. Hereby, BSs still have a *mean* distance of $\bar{s}$ but positions are normally-distributed with standard deviation $\bar{s}/8$. BSs are interconnected if their distance is below $1.25 \cdot \bar{s}$. The reason for having irregular input scenarios is to check whether the heuristic suffers from arbitrarily choosing new neighbors during the BFS. Fig. 4a and 4b shows two examples of these two arrangement types for n = 16.

The interconnections are optical and have a latency of $s \cdot \dfrac{1.45}{c}$, where c is the speed of c light and 1.45 the refraction index of the fibre. This corresponds to a typical Single-Mode Fibre (SMF) setup. Further, a Radio over Fibre (RoF) setup from the controllers to the BSs (note that this only affects the evaluation, the proposed concepts are generic enough to support any technology)is assumed. The RoF capacity of each link is 3000 MHz, which corresponds to standard RoF equipment. Every BSs consists of 3 sectors that have 4 antennas each, operated at a bandwidth of 100 MHz, which corresponding to a future wide band wireless system. The table below summarizes the input parameters.

| Parameter | Value |
|---|---|
| $C$ | $\{1..n\}$ |
| $L$ | $\{(u.\ v)\in\ C \times C$ |
| $b\_costF_u$ | 3 |
| $b\_costC_u$ | 0.5 |
| $b\_bw_u$ | $3\cdot4\cdot100$ MHz = 1200 MHz |
| $1\_cap_{u,v}$ | 3000 MHz if $u \neq v$, else $\infty$ |
| $1\_t_{u,v}$ | $s\cdot 1.45/c \approx 13.4\ \mu s$ (on average) |
| $1\_cost_{u,v}$ | $s/\bar{s} = 1$ (on average) |
| $cs_{min}$ | 3 |
| $cs_{max}$ | 50 |
| $t_{proc}$ | 0.5 ms |
| $t_{max}$ | 1 ms |

Experiments for $n \in \{3^2, 4^2, 5^2, 6^2, 7^2\}$ on a dual-core machine (3.33 GHz per core, 4 GB RAM) were done while setting the optimality gap of the MILP solver to 0.1. This means that the returned solution is at maximum 10 % worse than the optimal solution. Such a high gap was required to achieve solver runtimes below one week for the larger input scenarios.

Compared to solving the problem optimally with the MILP, the heuristic method has a substantially shorter runtime and much lower memory requirements. The difference is illustrated in Fig. 7a for regular (*reg*) and Fig. 7b for irregular (*irreg*) input scenarios. The figure shows two versions of the heuristic method to later demonstrate the advantage of choosing the start nodes for the BFS. The *simple* one simply picks the first node at the border of the input graph, independently of its location in the overall topology. The *mhop* heuristic, however, chooses new controller locations as proposed in Alg. 2, using the expected cluster size in the input graph.

The plot shows that while the MILP solver runtime quickly increases to multiple hours for input scenarios consisting of more than 25 BSs, the heuristic stays below 1 second.

To get an idea of the quality of the heuristics' output, Fig. 8a and 8b compares the output given by the MILP solver (cluster determiner) to the output of the two versions of our proposed heuristic (using the same legend as Fig. 7a and 7b). The resulting costs are the total costs for the returned network configuration, using the unit costs defined in the table mentioned before.

The returned output of the heuristic is at maximum 5% worse than the output provided by the MILP solver. Furthermore, the difference between the simple and mhop heuristic shows that the proposed way of choosing a new controller has a major influence, especially for irregular input scenarios, i.e., where BSs are distributed randomly in the plane and where links have different properties in terms of capacity and latency.

Note that in Fig. 8a, the heuristic (mhop) even produces lower costs than the MILP. This is possible as the optimality gap of the MILP solver is set to 10 %. The result of the heuristic, however, is better than that.

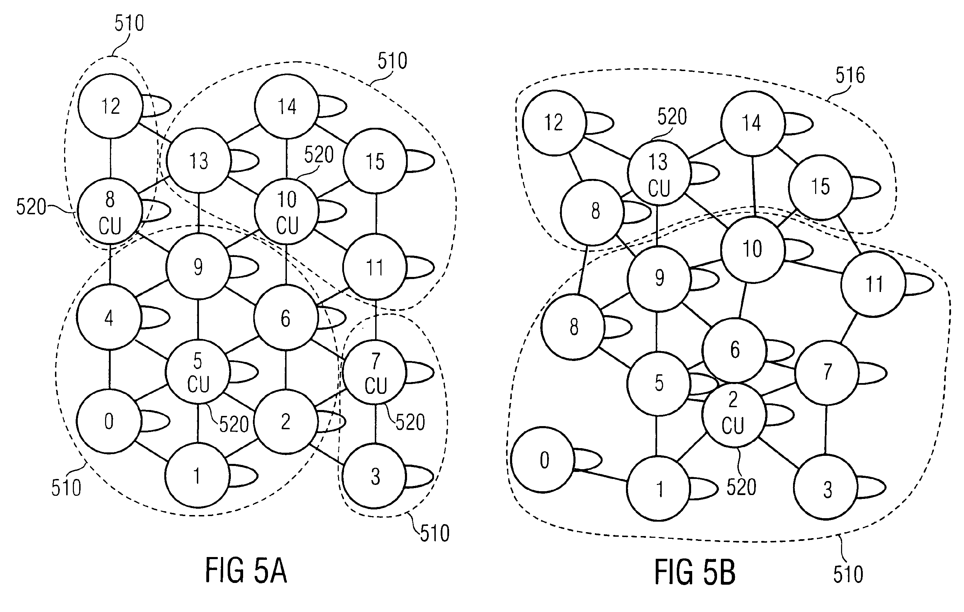

Fig. 5a shows an example for a core network configuration determined clusters 510 of base stations of a core network with regular arrangement. Each cluster 510 comprises at least one base station 0-15 and one control unit 520 located at a base station of the cluster 510. For example, this distribution of clusters 510 may be found by defining a constraint that each base station controlled by a control unit 520 must be directly connected (comprise a distance of only one base station to the control unit) to the control unit 520. In this example, a control unit 520 may be located at base station 5 first and the base station 0, 1, 2, 4, 6 and 9 are assigned to this control unit 520. Then, a further control unit 520 is located at base station 10 and the base stations 11, 13, 14 and 15 are assigned to this control unit. Further, a control unit 520 is located at base station 8 and base station 12 is assigned to this control unit 520, and a control unit 520 is located at base station 7 and base station 3 is assigned to this control unit 520.

Fig. 5b shows a further example for a determined core network configuration comprising clusters 510 with base stations comprising a distance of maximal two base stations to the control unit 520 of the cluster 510 for a core network with an irregular arrangement. In this example a control unit 520 may be located at base station 2 first and base stations 0, 1, 3 , 4, 5, 6, 7, 9 and 11 may be located to this control unit 520. Then, a further control unit 520 may be located at base station 13 and base stations 8, 10, 12, 14 and 15 may be assigned to this control unit 520.

In the example shown in Fig. 5a, a control unit 520 is located one base station away from the border of the core network (e.g. at base station 5 and base station 10) as long as possible. Then control units 520 are also located at the border of the core network (e.g. located at base station 7 and 8). In Fig. 5b, control units 520 are located two base stations away from the border (e.g. the control unit located at base station 2) and then control units 520 are located closer to the border (e.g. the control unit located at base station 13).

Some embodiments according to the invention relate to a backhaul configuration and wireline clustering in cooperative cellular networks or a backhaul design and controller placement for cooperative mobile access networks.

Using cooperation in wireless mobile access networks has attracted a lot of research attention recently due to the relevant benefits achievable in terms of wireless transmission capacity, inter-cell interference management, and reduction of energy consumption. Several techniques have been proposed so far (joint precoding, inter-cell coordination, beam-forming), each of them achieving different performance merits. The common denominator of these techniques is the presence of a central coordination or processing point that is located within the mobile operator core network. Although some of these proposals have thoroughly evaluated the amount of signaling required for deploying such cooperation techniques and the influence of imperfect backhaul networks on the wireless performance, none of them has explicitly addressed the issue of how to design the wireline part of a mobile access network to support these cooperation schemes and how to incorporate wireline network properties during the process of choosing cooperating cell clusters.

Exploiting cooperation in wireless mobile access networks leads to relevant benefits for wireless transmission capacity, inter-cell interference management, and reduction of energy consumption. The clustering of cooperative base station sets, necessary for achieving the desired wireless performance, poses several challenges in the backhaul architecture design. An optimally placement of controller/ processing nodes in the network and how to connect them to the clustered base stations is addressed, taking into account the specific requirements of the applied cooperation technique. For this, a MILP that may solve this optimally and a heuristic algorithm that approximates this solution is described. While the solution quality of the heuristic is close to the optimum, the runtime and memory requirements are multiple orders of magnitude lower than for the MILP. This permits to use this heuristic not only offline for network planning but also online to reconfigure an existing network during its runtime.

In the offline case, the heuristic may be applied before deploying a network. This application is similar to network planning.

In the online case, the cooperative network has already been deployed. Input data for the heuristic can be collected during the runtime of the network, e.g., to check for failures, or to detect situations where intentionally changing the network configuration might be beneficial. A good example for this are low-load situations during night where switching off BSs to save energy can be beneficial. In these situations, calculating alternative network configurations based on which the network is reconfigured on the fly can be done with the heuristic, thanks to its very low runtime and resource consumption.

Methods to position controller/processor nodes in a cooperative mobile access network and to assign BSs to them are proposed. The MILP returns optimal solutions but is only feasible for small input scenarios. The heuristic may produce solutions that are only 5 % worse than the MILP's output but has a runtime and memory consumption that is magnitudes lower compared to the MILP.

The heuristic allows to calculate quasi-optimal solutions for large input scenarios and can be applied during the runtime of a network to reconfigure it on the fly, thanks to the low resource requirements. The heuristic approach may be extended to position controllers independently of the BS locations, to take into account shared resources in tree or ring topologies, and to support multiple overlapping clusters per BS.

The proposed concept addresses, for example, clustering based on wireline network properties in the network MIMO or CoMP context.

This may be a mechanism that finds feasible clusters (preclustering), which may be the largest possible clusters from the wireline networks point of view depending on, e.g. latency, capacity or load (e.g. calculated on seconds time scale). A wireless cooperation may be done in sub clusters of the wireline clusters, for example, depending on actual wireless condition (e.g. calculated on milliseconds time scale).

In this way, a system that combines wireline and wireless information for clustering may be realized. This may be done, for example, by extending the loop (for wireless clustering) by wireline clustering.

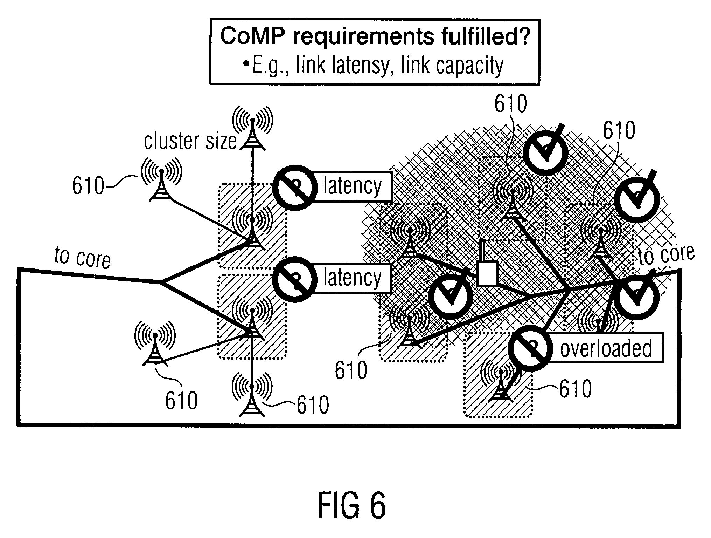

One possible algorithm for the wireline clustering may be a greedy algorithm. For this, a graph representation (a predefined basic network configuration) of the wireline network may be created. Then the algorithm may be executed for each cell that intends to use CoMP techniques. This may be recalculated on a time scale of seconds. An example for clustering is shown in Fig. 6. Only base stations 610 fulfilling all CoMP requirements (e.g. link latency, link capacity, cluster size or others) may be considered for wireless clustering. The proposed concept may enable to save wireless and/or wireline capacity (avoiding congestion) by identifying infeasible clusters in advance. In this way, an unnecessary channel state information exchange among mobile terminals and base stations that will not be able to cooperate may be avoided resulting in a reduced signaling. Further, it may be avoided to deploy base station cooperation for clusters that are infeasible from the wireline point of view resulting in reduced user data. Further, computation time for wireless clustering may be saved by avoiding unnecessary calculations for clusters that will not be feasible.

The wireline clustering problem may be optionally solved by MILP (NP complete). Compared to MILP, the proposed heuristic algorithm may require shorter run time and lower memory consumption while providing nearly identical output quality (e.g. link latency and link capacity may be used as constraints in the evaluation).

By using the described concept the mobile network performance may be improved and the algorithm may be a basis for using network-MIMO or CoMP in real networks. Further, simplified CoMP procedures with reduced channel state information gathering or exchange and/or less overhead in the wireless and/or wireline network may be enabled.

Some embodiments according to the invention relate to a method or an apparatus for extending cooperative wireless systems to use information about the wireline network part, like latency, capacity, and current load during the clustering process. Before doing the clustering based on the wireless channel conditions, information about the wireline part of the network may be used to avoid overhead for calculating wireless (clusters) that are infeasible due to the wireline network conditions, like overloaded backhaul links. Summarizing, a system that augments network-MIMO or CoMP clustering with wireline information may be realized, for example.

Further, this may be extended by a method for performing the wireline clustering. This method may be based on an extended breadth-first search (BFS) algorithm that can be executed on a central node or distributedly while the system is operating. Given the wireline network's current status (consisting of e.g., the link latencies, capacities, and utilizations) and the desired cooperation. Summarizing, a method for preclustering, i.e. finding feasible wireline clusters in the network within which wireless clusters are searched for afterwards may be realized, for example.

A possible greedy algorithm approach may be, for example:

For each cell C, do:

- Start breadth-first-search (BFS) from cell C

o If a newly found cell X can be controlled by the controller/processing node of C without breaking constraints:

■ Add X to the cluster controlled by C

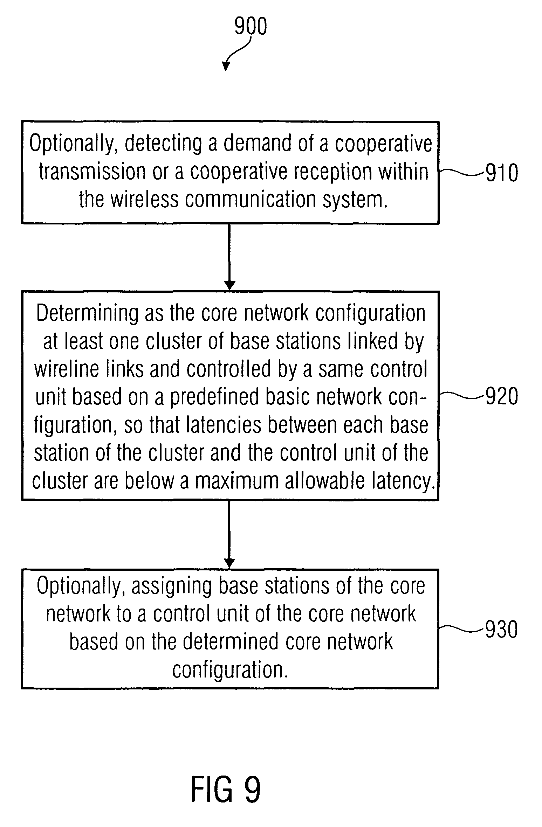

Fig. 9 shows a flowchart of a method 900 for determining a core network configuration of a wireless communication system according to an embodiment of the invention. A core network of a wireless communication system comprises a plurality of base stations, a plurality of wireline links between the base stations and at least one control unit for controlling a cluster of base stations of the plurality of base stations. The method 900 comprises determining 920 as the core network configuration at least one cluster of base stations linked by wireline links and controlled by a same control unit based on a predefined basic network configuration, so that latencies between each base station of the cluster and the control unit of the cluster are below a maximum allowable latency. The predefined basic network configuration represents information about all base stations of a core network to be configured and about possible wireline links between the base stations.

Further, the method 900 comprises optionally detecting 910 a demand of a cooperative transmission or a cooperative reception within the wireless communication system, wherein the determination 920 of a core network configuration may be triggered by the detected demand of a cooperative transmission or a cooperative reception.

Further, the method 900 optionally comprises assigning 930 base stations of the core network to a control unit of the core network based on the determined core network configuration.

Additionally, the method 900 may comprise further optional steps representing one or more aspects of the proposed concepts described above.

Some embodiments according to the invention relate to a method for determining channel state information from base stations for a cooperative transmission of data to a wireless device in a wireless communication system with a core network comprising a plurality of base stations, a plurality of wireline links between the base stations and at least one control unit for controlling a cluster of base stations of the plurality of base stations. The method comprises determining a core network configuration of a wireless communication system according to the concept described above. Further, the method comprises determining channel state information between a base station and a wireless device for each base station of a determined cluster located within a transmission range of the wireless device, wherein no channel state information is determined for at least one base station of the core network located within the transmission range of the wireless device being not contained by the determined cluster.

Although some aspects of the described concept have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

**Claims**

1. Apparatus (100) for determining a core network configuration (112) of a wireless communication system, wherein a core network of a wireless communication system comprises a plurality of base stations, a plurality of wireline links between the base stations and at least one control unit for controlling a cluster of base stations of the plurality of base stations, the apparatus comprising:

    a cluster determiner (110) configured to determine as the core network configuration (112) at least one cluster of base stations linked by wireline links and controlled by a same control unit based on a predefined basic network configuration (102), so that latencies between each base station of the cluster and the control unit of the cluster are below a maximal allowable latency,
    wherein the predefined basic network configuration (102) represents information about all base stations of a core network to be configured and about possible wireline links between the base stations.

2. The apparatus according to claim 1, wherein the cluster determiner (110) is configured to determine the at least one cluster, so that a capacity of all wireline links between base stations and between a base station and the control unit is larger than a required capacity.

3. The apparatus according to claim 2, wherein the cluster determiner (110) is configured to determine the at least one cluster, so that a capacity of all wireline links between base stations and between a base station and the control unit under consideration of a current or mean load of the core network is larger than a required capacity.

4. The apparatus according to one of claims 1 to 3, wherein the cluster determiner (110) is configured to determine the at least one cluster, so that a cost function of the core network to be configured is optimized.

5. The apparatus according to one of the claims 1 to 4, wherein the cluster determiner (110) is configured to determine a first core network configuration (112) under consideration of a first load of the core network at a first time and a second core network configuration (112) under consideration of a second load of the core network at a second time, wherein the first determined core network configuration (112) is different from the second determined core network configuration (112).

6. Apparatus according to one of the claims 1 to 5, comprising a base station assigning unit (230) configured to assign base stations of the core network to a control unit of the core network based on the determined core network configuration (112).

7. The apparatus according to one of claims 1 to 6, wherein the cluster determiner (110) is configured to determine a plurality of clusters of base stations linked by wireline links and controlled by a respective control unit based on the predefined basic network configurations, so that each base station of the core network is contained by one of the determined clusters and all latencies between the base stations and the respective control unit of their clusters are below the maximal allowable latency.

8. The apparatus according to one of claims 1 to 7, wherein the cluster determiner is configured to determine a position of a control unit of the at least one cluster to be determined based on the predefined basic network configuration, so that a number of base stations between the control unit and a base station at the border of the core network is maximal while the latency between the control unit and the base station at the border of the core network is below the maximal allowable latency.

9. The apparatus according to one of claims 1 to 8, wherein the cluster determiner (110) is configured to determine the at least one cluster based on a mixed integer linear program algorithm or a breadth-first-search algorithm.

10. The apparatus according to one of claims 1 to 9, comprising a cooperation demand detector (220) configured to detect the demand of a cooperative transmission or a cooperative reception within the wireless communication system, wherein the determination of a core network configuration (112) or the cluster determiner (110) is triggered by the detected demand (222) of a cooperative transmission or a cooperative reception.

**11.** Wireless communication system (250) with a core network comprising a plurality of base stations (262), a plurality of wireline links between the base stations and at least one control unit (264) for controlling a cluster of base stations (262) of the plurality of base stations, the wireless communication system comprising:

an apparatus for determining a core network configuration of a wireless communication system according to one of the claims 1 to 10; and
one or more channel state information determiner (266) configured to determine channel state information between a base station (262) and a wireless device (280) for each base station (262) of a determined cluster located within a transmission range (282) of the wireless device (280), wherein no channel state information is determined for at least one base station of the core network located within the transmission range (282) of the wireless device (280) being not contained by the determined cluster.

**12.** The wireless communication system according to claim 11, wherein the one or more channel state information determiner (266) is configured to determine only channel state information for each base station (262) of the determined cluster located within the transmission range (282) of the wireless device (280) without determining channel state information for any base station being not contained by the determined cluster.

**13.** The wireless communication system according to claim 11 or 12, wherein the cluster determiner (110) or a control unit of a cluster is configured to determine base stations contained by a same cluster of the core network and located within the transmission range (282) of the wireless device (280) to obtain a sub cluster of base stations and configured to determine base stations of the sub cluster being able to perform a cooperative transmission to the wireless device (280) or a cooperative reception from the wireless device (280).

**14.** Method (900) for determining a core network configuration of a wireless communication system, wherein a core network of a wireless communication system comprises a plurality of base stations, a plurality of wireline links between the base stations and at least one control unit for controlling a cluster of base stations of the plurality of base stations, the method comprising:

determining (920) as the core network configuration at least one cluster of base stations linked by wireline links and controlled by a same control unit based on a predefined basic network configuration, so that latencies between each base station of the cluster and the control unit of the cluster are below a maximum allowable latency,
wherein the predefined basic network configuration represents information about all base stations of a core network to be configured and about possible wireline links between the base stations.

**15.** Computer program with a program code for performing the method according to claim 14, when the computer program runs on a computer, a digital signal processor or a microcontroller.

**Amended claims in accordance with Rule 137(2) EPC.**

**1.** Apparatus (100) for determining a core network configuration (112) of a wireless communication system, wherein a core network of a wireless communication system comprises a plurality of base stations, a plurality of wireline links between the base stations and at least one control unit for controlling a cluster of base stations of the plurality of base stations, the apparatus comprising:

a cluster determiner (110) configured to determine a plurality of clusters of base stations linked by wireline links and controlled by a respective control unit to obtain the core network configuration, so that all latencies between the base stations and the respective control unit of their clusters are below a maximal allowable latency,
wherein the cluster determiner (110) is configured to determine a cluster of base stations linked by wireline links and controlled by a same control unit based on a predefined basic network configuration (102) by adding a base station to the cluster, if a latency between the base station and the control unit of the cluster is below the maximal allowable latency, so that latencies between each base station of the cluster and the control unit of the cluster are below the maximal allowable latency,
wherein the predefined basic network configuration (102) represents information about all base stations of a core network to be configured and about possible wireline links between the base stations.

**2.** The apparatus according to claim 1, wherein the cluster determiner (110) is configured to determine the at least one cluster, so that a capacity of all wireline links between base stations and between a base station and the control unit is larger than a required capacity.

**3.** The apparatus according to claim 2, wherein the cluster determiner (110) is configured to determine the at least, one cluster under consideration of a current or mean load of the core network, so that a capacity of all wireline links between base stations and between a base station and the control unit is larger than a required capacity.

**4.** The apparatus according to one of claims 1 to 3, wherein the cluster determiner (110) is configured to determine the at least one cluster, so that a cost function of the core network to be configured is optimized.

**5.** The apparatus according to one of the claims 1 to 4, wherein the cluster determiner (110) is configured to determine a first core network configuration (112) under consideration of a first load of the core network at a first time and a second core network configuration (112) under consideration of a second load of the core network at a second time, wherein the first determined core network configuration (112) is different from the second determined core network configuration (112).

**6.** Apparatus according to one of the claims 1 to 5, comprising a base station assigning unit (230) configured to assign base stations of the core network to a control unit of the core network based on the determined core network configuration (112).

**7.** The apparatus according to one of claims 1 to 6, wherein the cluster determiner is configured to determine a position of a control unit of the at least one cluster to be determined based on the predefined basic network configuration, so that a number of base stations between the control unit and a base station at the border of the core network is maximal while the latency between the control unit and the base station at the border of the core network is below the maximal allowable latency.

**8.** The apparatus according to one of claims 1 to 7, wherein the cluster determiner (110) is configured to determine the at least one cluster based on a mixed integer linear program algorithm or a breadth-first-search algorithm.

**9.** The apparatus according to one of claims 1 to 8, comprising a cooperation demand detector (220) configured to detect the demand of a cooperative transmission or a cooperative reception within the wireless communication system, wherein the determination of a core network configuration (112) or the cluster determiner (110) is triggered by the detected demand (222) of a cooperative transmission or a cooperative reception.

**10.** Wireless communication system (250) with a core network comprising a plurality of base stations (262), a plurality of wireline links between the base stations and at least one control unit (264) for controlling a cluster of base stations (262) of the plurality of base stations, the wireless communication system comprising:

> an apparatus for determining a core network configuration of a wireless communication system according to one of the claims 1 to 9; and
> one or more channel state information determiner (266) configured to determine channel state information between a base station (262) and a wireless device (280) for each base station (262) of a determined cluster located within a transmission range (282) of the wireless device (280), wherein no channel state information is determined for at least one base station of the core network located within the transmission range (282) of the wireless device (280) being not contained by the determined cluster.

**11.** The wireless communication system according to claim 10, wherein the one or more channel state information determiner (266) is configured to determine only channel state information for each base station (262) of the determined cluster located within the transmission range (282) of the wireless device (280) without determining channel state information for any base station being not contained by the determined cluster.

**12.** The wireless communication system according to claim 10 or 11, wherein the cluster determiner (110) or a control unit of a cluster is configured to determine base stations contained by a same cluster of the core network and located within the transmission range (282) of the wireless device (280) to obtain a sub cluster of base stations and configured to determine base stations of the sub cluster being able to perform a cooperative transmission to the wireless device (280) or a cooperative reception from the wireless device (280).

**13.** Method (900) for determining a core network configuration of a wireless communication system, wherein a core network of a wireless communication system comprises a plurality of base stations, a plurality of wireline links between the base stations and at least one control unit for controlling a cluster of base stations of the plurality of base stations, the method comprising:

determining (920) a plurality of clusters of base stations linked by wireline links and controlled by a respective control unit to obtain the core network configuration, so that all latencies between the base stations and the respective control unit of their clusters are below a maximal allowable latency,
wherein a cluster of base stations linked by wireline links and controlled by a same control unit is determined based on a predefined basic network configuration by adding a base station to the cluster, if a latency between the base station and the control unit of the cluster is below the maximal allowable latency, so that latencies between each base station of the cluster and the control unit of the cluster are below the maximum allowable latency,
wherein the predefined basic network configuration represents information about all base stations of a core network to be configured and about possible wireline links between the base stations.

**14.** Computer program with a program code for performing the method according to claim 13, when the computer program runs on a computer, a digital signal processor or a microcontroller.

100

102

cluster
determiner 110

112

FIG 1

200

cooperation
demand
detector — 220

222

102

cluster
determiner — 110

112

base station
assigning
unit — 230

232

# FIG 2A

FIG 2B

FIG 3

EP 2 445 246 A1

FIG 4A

FIG 4B

EP 2 445 246 A1

FIG 5A

FIG 5B

EP 2 445 246 A1

FIG 6

FIG 7A

FIG 7B

FIG 8A

FIG 8B

costs

input scenario size [number of cells]

900

Optionally, detecting a demand of a cooperative transmission or a cooperative reception within the wireless communication system. —910

Determining as the core network configuration at least one cluster of base stations linked by wireline links and controlled by a same control unit based on a predefined basic network configuration, so that latencies between each base station of the cluster and the control unit of the cluster are below a maximum allowable latency. —920

Optionally, assigning base stations of the core network to a control unit of the core network based on the determined core network configuration. —930

# FIG 9

**FIG 10**

EP 2 445 246 A1

FIG 11

EP 2 445 246 A1

1200

"wireline" clusters

"wireless" clusters

1210

1010

1030

1020

1220

1010

1030

to core

1020

1030

1220

1010

C

to core

1210

1220

1220

FIG 12

EP 2 445 246 A1

1300

collect wireless channel
properties (e.g., CSI) for
**all** BSs

2

| 1310 | wireless clustering | 3 | cooperative transm./rec. | 1320 |

1

(detect cooperation necessity)

# FIG 13

Europäisches
Patentamt

European
Patent Office

Office européen
des brevets

# EUROPEAN SEARCH REPORT

Application Number

EP 10 19 0891

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/025286 A2 (QUALCOMM INC [US]; GOROKHOV ALEXEI Y [US]; MALLIK SIDDHARTHA [US]; BHU) 4 March 2010 (2010-03-04) | 1-4,6-15 | INV. H04W16/18 |
| Y | paragraphs [0013], [0045], [0046], [0051] - [0053], [0057], [0059], [0064], [0083], [00103], [00106], [00107], [00110], [00112]; figures 3, 13, 20 | 5 | |
| A | WO 2010/019904 A1 (QUALCOMM INC [US]; MALLIK SIDDHARTHA [US]; HOU JILEI [US]; FARAJIDANA) 18 February 2010 (2010-02-18) paragraphs [0008], [0009], [0021] - [0029]; figures 1-5 | 1-15 | |
| Y | WO 2008/155764 A2 (DUOLINK LTD [IL]; SCHATZBERGER SHAIKE [IL]) 24 December 2008 (2008-12-24) | 5 | |
| A | page 5, line 14, to page 6, line 5; page 22, line 25, to page 23, line 6; page 33. line 19, to page 35, line 28; figures 1, 12-19 | 1-4,6-15 | TECHNICAL FIELDS SEARCHED (IPC) H04W H04B |
| A | US 2010/067450 A1 (BALACHANDRAN KRISHNA [US] ET AL) 18 March 2010 (2010-03-18) paragraphs [0005] - [0008], [0011], [0012], [0020], [0027], [0028], [0031], [0032]; figures 1-3 | 1-15 | |
| A | WO 2010/060185 A1 (NORTEL NETWORKS LTD [CA]; FARMANBAR HAMIDREZA [CA]; KHANDANI AMIR KEYV) 3 June 2010 (2010-06-03) page 1, line 20, to page 2, line 8; page 3, line 1, to page 4, line 2; figures 1, 11 | 1-15 | |

-/--

The present search report has been drawn up for all claims

| Place of search | Date of completion of the search | Examiner |
|---|---|---|
| Berlin | 7 February 2011 | Jaster, Nicole |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 10 19 0891

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| A | AGISILAOS PAPADOGIANNIS ET AL: "Downlink overhead reduction for Multi-Cell Cooperative Processing enabled wireless networks" PERSONAL, INDOOR AND MOBILE RADIO COMMUNICATIONS, 2008. PIMRC 2008. IEEE 19TH INTERNATIONAL SYMPOSIUM ON, 15 September 2008 (2008-09-15), pages 1-5, XP031371726 IEEE, PISCATAWAY, NJ, USA ISBN: 978-1-4244-2643-0 abstract; sections I., II. D., III., V. ----- | 1-15 | |
| A | J. Hoydis, M. Kobayashi, and M. Debbah: "On the optimal number of cooperative base stations in network MIMO systems" Cornell University Library, [Online] 1 March 2010 (2010-03-01), pages 1-26, XP002616863 Retrieved from the Internet: URL:http://arxiv.org/PS_cache/arxiv/pdf/10 03/1003.0332v1.pdf> [retrieved on 2011-01-12] abstract; section I. (introduction) ----- | 1-15 | TECHNICAL FIELDS SEARCHED (IPC) |

The present search report has been drawn up for all claims

| Place of search | Date of completion of the search | Examiner |
|---|---|---|
| Berlin | 7 February 2011 | Jaster, Nicole |

EPO FORM 1503 03.82 (P04C01)

## ANNEX TO THE EUROPEAN SEARCH REPORT
## ON EUROPEAN PATENT APPLICATION NO.

EP 10 19 0891

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2011

| Patent document cited in search report | | Publication date | Patent family member(s) | | Publication date |
|---|---|---|---|---|---|
| WO 2010025286 | A2 | 04-03-2010 | US | 2010056215 A1 | 04-03-2010 |
| WO 2010019904 | A1 | 18-02-2010 | US | 2010041411 A1 | 18-02-2010 |
| WO 2008155764 | A2 | 24-12-2008 | US | 2010157901 A1 | 24-06-2010 |
| US 2010067450 | A1 | 18-03-2010 | WO | 2010033158 A1 | 25-03-2010 |
| WO 2010060185 | A1 | 03-06-2010 | NONE | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **V. JUNGNICKEL ; L. THIELE ; T. WIRTH ; T. HAUSTEIN ; S. SCHIFFERMÜLLER ; A. FORCK ; S. WAHLS ; S. JAECKEL ; S. SCHUBERT ; H. GÄBLER.** Coordinated multipoint trials in the downlink. *Proc. IEEE Broadband Wireless Access Workshop,* November 2009
- **V. JUNGNICKEL ; M. SCHELLMANN ; L. THIELE ; T.WIRTH ; T. HAUSTEIN ; O. KOCH ; W. ZIRWAS ; E. SCHULZ.** Interference-aware scheduling in the multiuser MIMO-OFDM downlink. *IEEE Communications Magazine,* June 2009, vol. 47 (6), 56-66
- **S. VENKATESAN ; H. HUANG ; A. LOZANO ; R. VALENZUELA.** A WiMAX based implementation of network MIMO for indoor wireless systems. *EURASIP Journal on Advances in Signal Processing,* 2009
- **W. CHOI ; J. G. ANDREWS.** The capacity gain from intercell scheduling in multi-antenna systems. *IEEE Transactions on Wireless Communications,* February 2008, vol. 7 (2), 714-725
- **J. G. ANDREWS ; A. GHOSH ; R. W. HEATH.** Networked MIMO with clustered linear precoding. *IEEE Transactions on Wireless Communications,* April 2009, vol. 8 (4), 1910-1921
- **V. JUNGNICKEL ; T. WIRTH ; M. SCHELLMANN ; T. HAUSTEIN ; W. ZIRWAS.** Synchronization of cooperative base stations. *Proc. IEEE Int. Symp. on Wireless Communication Systems,* 2008, 329-334

- **J. HOYDIS ; M. KOBAYASHI ; M. DEBBAH.** *On the optimal number of cooperative base stations in network MIMO systems,* 2010
- **G. CAIRE ; S. A. RAMPRASHAD ; H. C. PAPADOPOULOS.** Rethinking network MIMO: Cost of CSIT, performance analysis, and architecture comparisons. *Proc. IEEE Information Theory and Applications Workshop,* January 2010
- **L. THIELE ; M. SCHELLMANN ; S. SCHIFFERMÜLLER ; V. JUNGNICKEL ; W. ZIRWAS.** Multi-cell channel estimation using virtual pilots. *Proc. IEEE Vehicular Technology Conference,* May 2008, 1211-1215
- **G. CAIRE ; S.A. RAMPRASHAD ; H.C. PAPADOPOULOS ; C. PEPIN ; C.E. SUNDBERG.** Multiuser MIMO Downlink with Limited Inter-Cell Cooperation: Approximate Interference Alignment in Time, Frequency and Space. *Communication, Control, and Computing, 2008 46th Annual Allerton Conference on, 2008,* 2008, 730-737
- **A. BENJEBBOUR ; M. SHIRAKABE ; Y. OHWATARI ; J. HAGIWARA ; T. OHYA.** Evaluation of user throughput for MU-MIMO coordinated wireless networks. *Proc. IEEE International Symposium on Personal, Indoor and Mobile Radio Communications,* September 2008